# EUROPÄISCHE PATENTSCHRIFT

(11) **EP 0 523 610 B1**
(45) Veröffentlichungstag und Bekanntmachung des Hinweises auf die Patenterteilung: **04.01.1995**
(21) Anmeldenummer: 92111946.7
(22) Anmeldetag: 14.07.1992
(51) Int. Cl.: C09D 163/00, C09D 175/04

(54) **Wässriges Überzugsmittel und dessen Verwendung**
Aqueous coating agent and use thereof
Agent aqueux de revêtement et son utilisation

(30) Priorität: 18.07.1991 DE 4123860
(43) Veröffentlichungstag der Anmeldung: 20.01.1993
(73) Patentinhaber: Herberts Gesellschaft mit beschränkter Haftung, 42285 Wuppertal (DE)
(72) Erfinder: Obloh, Ronald, Dr., W-4600 Dortmund 16 (DE); Schwan, Heiner, Dr., W-5600 Wuppertal 2 (DE)
(74) Vertreter: Türk, Gille, Hrabal, Leifert

(56) Entgegenhaltungen:
- WO-A-90/15108

## Beschreibung

Die Erfindung betrifft eine wäßrige Überzugsmittel-Zusammensetzung, die für die Herstellung von Überzügen ohne Oberflächenstörungen geeignet ist. Sie kann zweikomponentig (2K) oder einkomponentig (1K) vorliegen. Sie ist besonders geeignet zur Herstellung von Grundierungen für Mehrschichtlackierungen.

Zweikomponenten-Epoxidharz-Systeme auf wasserverdünnbarer Basis sind in der Industrie bekannt. Sie werden z. B. für den Korrosionsschutz verwendet. Dabei ist es möglich, über die Auswahl der Epoxidharze und über die Auswahl des Aminvernetzers die Eigenschaften des überzugsmittels zu beeinflussen. Allgemeine Grundsätze dafür werden in dem Artikel von C. Godau in I-Lack 4/90, 58. Jahrgang, Seite 134, beschrieben. Als Vorteile werden eine gute Elastizität sowie eine gute Naßfilmhaftung beschrieben. Es wird auf die Schwierigkeiten einer guten Filmbildung hingewiesen, die von den Trocknungsbedingungen und von dem Pot-Life der Harzmischung abhängt. Ebenso wird darauf hingewiesen, daß die Dispersionsstabilität z. B. von Pigmenten mit einem hohen Anteil salzbildender d.h. ionischer Substanzen negativ beeinflußt wird.

In der EP-A 0 176 192 wird ein 2- oder 3-Komponenten-Material beschrieben, das aus einem Epoxidharz, einem Polymer hergestellt durch radikalische Polymerisation von olefinisch ungesättigten Monomeren sowie einem Bindemittel mit gegen Epoxidgruppen reaktiven Gruppen besteht. Wäßrige Dispersionen werden über hydrophile Gruppen oder Verwendung von Emulgatoren erzeugt.

In der DE-OS 38 25 754 werden 2-Komponenten-Epoxid-Amin-Systeme beschrieben, die mit Wasser verdünnt werden können. Dabei ist der Wassergehalt < 20 %, man kann also nicht von einem wäßrigen Überzugsmittel sprechen. Als Vernetzungskomponente werden aliphatische di-primäre Diamine von C2 - C12 erwähnt. Als filmbildener Bestandteil werden Polyglycidyl-Verbindungen auf Basis von Bisphenolen oder Polyolen erwähnt, zusammen mit einem Bindemittel auf Basis von OH-haltigen Polyacrylaten oder Polyethern. Nachteilig an diesen Überzugsmitteln ist, daß bei höherem Wassergehalt verschlechterte Filmeigenschaften erhalten werden. Unter dem Gesichtspunkt des Umweltschutzes sind Zusammensetzungen dieser Art nicht besonders geeignet.

In der EP-A 0 319 841 werden 2-komponentige wäßrige Epoxid-Amin-Überzugsmittel beschrieben. Eine Komponente besteht aus einer wäßrigen Dispersion von Epoxidharzen, die andere Komponente besteht aus einem speziellen Urethan-Oligomeren mit endständigen aminfunktionellen Gruppen, die zwischen 25 und 40 % mit Säure neutralisiert vorliegen. Außerdem werden organische Lösungsmittel bis zu 20 % zugesetzt, um einen ausreichenden Verlauf des Films zu erzielen. Für die Herstellung des aminfunktionellen Polyurethan-Oligomeren werden spezielle Verfahrensschritte angegeben.

Eine allgemeine Schwierigkeit der bekannten üblichen 2-K wäßrigen Überzugsmittel auf Basis Epoxidharz und Polyamin ist darin zu sehen, daß die wäßrigen Lösungen stabil sein müssen. Bei Verwendung von ionischen Gruppen ist die Stabilität der wäßrigen Dispersionsmischung häufig ungenügend. Ein weiterer Nachteil der Überzugsmittel auf Basis ionischer Dispersionen ist der, daß damit ungleichmäßige Oberflächen, z. B. Nadelstiche, nach dem Verfließen erhalten werden. Außerdem sind die bekannten 2K-Epoxid-Amin-Überzugsmittel für Kunststofflackierungen nicht geeignet, da sie nach dem Vernetzen zu unelastisch sind.

Aufgabe der vorliegenden Erfindung ist es, wäßrige Epoxid-Amin-Überzugsmittel zur Verfügung zu stellen, die einzeln und deren Einzelkomponenten stabil sind und die als Mischung stabile Dispersionen ergeben und die nach der Applikation glatte, störungsfreie Oberflächen erzeugen. Dabei sollen Überzüge mit guter Haftung zu Substrat und Nachfolgeschichten erhalten werden, die eine hohe Elastizität aufweisen.

Das wird dadurch erreicht, daß das Überzugsmittel aus einem wäßrigen epoxidharzhaltigen filmbildenden Bindemittel besteht und einer Vernetzerkomponente auf Basis eines wäßrigen oder wasserverdünnbaren Polyamins, wobei entweder die Epoxidharzkomponente oder die Polyaminkomponente oder beide Komponenten gemeinsam 5 - 80 Gew.-%, bezogen auf die Summe von Epoxidharz undPolyamin jeweils als Harzfestkörper bestimmt, eines Polyurethanharzes in wasserlöslicher oder wasserdispergierbarer Form enthält. Dieses wäßrige Polyurethanharz enthält im wesentlichen keine zur Vernetzung dienenden reaktiven Gruppen; es kann ionisch oder nicht-ionisch stabilisiert sein. Zusätzlich kann das Überzugsmittel noch Pigmente, Füllstoffe,und/oder weitere übliche lacktechnische Additive enthalten.

Erfindungsgemäß werden wasserverdünnbare Bindemittel und Vernetzer eingesetzt. Wasserverdünnbar bedeutet, daß in eine wäßrige Form überführt werden kann, sei es als Dispersion, Emulsion oder in molekular gelöster Form. Als Lösungsmittel ist im Überzugsmittel im wesentlichen Wasser enthalten.

Als Bindemittelkomponente der erfindungsgemäßen Überzugsmittel können handelsübliche Di- oder Polyepoxide eingesetzt werden. Diese Bindemittelkomponente sind filmbildende Epoxidharze, die als wäßrige Dispersion oder als wasserverdünnbares Harz vorliegen. Beispiele für solche Polyepoxide sind Polyglycidylether auf Basis von aliphatischen oder aromatischen Diolen wie Bisphenol A, Bisphenol F, Novolake oder Polyalkylenglycole, die im Handel üblich und dem Fachmann geläufig sind.

Weitere Beispiele für Polyepoxidverbindungen sind Umsetzungsprodukte von aromatischen Diphenolen mit aromatischen Polycarbonsäuren, wie z. B. Phthal- oder Terephthalsäure oder Trimellithsäure, zu Polyestern. Diese werden mit beispielsweise 2,3-Epoxy-1-propanol zu den Epoxidverbindungen umgesetzt.

Weitere Beispiele sind glycidylfunktionalisierte (Meth)acrylpolymere. Dabei können glycidylfunktionelle Monomere einpolymerisiert werden, wie z. B. Glycidyl(meth)acrylat oder 1,2-Epoxybutylacrylat, oder OH-haltige (Meth)acrylate können nach der Polymerisation über die OH-Gruppe mit Epoxidgruppen-haltigen Verbindungen modifiziert werden. Die Polymere können über weitere Comonomere in ihren Eigenschaften beeinflußt werden.

Unter (Meth)acryl soll hier Acryl und/oder Methacryl verstanden werden. Beispiele für wäßrige Epoxidharzdispersionen sind in der DE-OS 36 43 751 und in der DE-OS 38 20 301 beschrieben. Es handelt sich um modifizierte Epoxidharze auf Basis von aromatischen Diolen, die stabile wäßrige Lösungen ergeben.

Das Epoxidharz hat ein Epoxidäquivalentgewicht von 100 bis 10000. Das Zahlenmittel des Molekulargewichts (Mn) der Epoxidharze liegt bevorzugt zwischen 400 - 50 000, im Falle von Polyether-Epoxiden und von Polyester-Epoxiden bevorzugt von 500 - 10 000, im Falle von (Meth)acrylat-Epoxidharzen bevorzugt von 2 000 - 10 000. Die Polyepoxidharze enthalten bevorzugt ca. 2 und mehr Epoxidgruppen pro Molekül. Die Epoxidharze sind so aufgebaut, daß Wasserverdümmbarkeit, z.B. Wasserlöslichkeit gegeben ist. Das kann entweder durch Einreagieren von hydrophilen Gruppen geschehen, wie z. B. Polyetherstrukturen oder Polyolstrukturen oder die Epoxidharze werden mit ionischen oder nicht-ionischen Emulgatoren in die Wasserphase überführt. Bevorzugt sind Polyepoxide auf Basis aromatischer Hydroxylverbindungen. Ebenfalls bevorzugt ist die Verwendung von wäßrigen Epoxidharzdispersionen.

Als Polyaminkomponenten können z.B. solche verwendet werden, die in der Literatur schon für Zweikomponenten-Epoxid/Amin-Systeme beschrieben wurden. Sie enthalten reaktive Aminogruppen und gegebenenfalls weitere die Wasserlöslichkeit erhöhende funktionelle Gruppen. Die geeigneten Polyamin-Komponenten, die als Vernetzer geeignet sind, können filmbildende Eigenschaften haben.

Das Äquivalentgewicht pro aktivem H-Atom liegt bei 50 bis 500, bevorzugt bei 100 bis 300. Das Molekulargewicht unterliegt keiner Begrenzung, solange Wasserverdünnbarkeit und Reaktivität gegeben sind. Bevorzugt sind Zahlenmittel des Molekulargewichts (Mn) von mindestens 100, z. B. 200 bis 10000.

Die Aminkomponente ist so zu wählen, daß eine Wasserverdünnbarkeit oder Wasserlöslichkeit der Aminkomponente gegeben ist. Das kann durch die Anzahl von polaren Gruppen wie beispielsweise OH-Gruppen, Aminogruppen, Harnstoffgruppen oder Polyetherstrukturen erfolgen. Die Vernetzerkomponente kann entweder als wäßrige Dispersion vorliegen oder sie wird als konzentrierte Form bei der Verarbeitung mit Wasser verdünnt. Bevorzugt sind Polyamine auf aliphatischer Basis.

Geeignete Polyamine sind beispielsweise Diamine und Amine mit mehr als 2 Aminogruppen, wobei die Aminogruppen primär und/oder sekundär sein können. Darüber hinaus sind als Polyamine Addukte geeignet, die aus Polyaminen mit mindestens 2 primären Aminogruppen bestehen und über weitere funktionelle Gruppen modifiziert werden können, z. B. mit Epoxyverbindungen, mit Polyisocyanaten oder mit (Meth)acryloylverbindungen. Weiterhin sind als Polyamine Polymere geeignet, in die die aminofunktionellen Gruppen erst nachträglich durch Reaktion eingeführt wurden.

Beispiele für geeignete Polyamine sind in den EP-A 0 240 083 oder EP-A-0 346 982 beschrieben. Beispiele hierfür sind aliphatische und/oder cycloaliphatische Amine mit 2-24 C-Atomen, die 2-10 primäre Aminogruppen und 0-5 sekundäre Aminogruppen enthalten. Repräsentative Beispiele hierfür sind Hexamethylendiamin, 1,2-Diaminocyclohexan, Isophorondiamin, Diethylentriamin oder Polyetherpolyamine.

Beispiele für übliche Polyamine auf der Basis von modifizierten polyfunktionellen Amin-Komponenten mit di- oder polyfunktionellen Epoxyverbindungen sind solche, die hergestellt werden unter Verwendung von beispielsweise Diglycidyl- oder Polyglycidylethern auf Basis von Bisphenol A oder Bisphenol F, Polyglycidylether von Phenolformaldehyd oder Novolaken; Glycidylaether von Fettsäure mit 6-24 C-Atomen, epoxidierte Polybutadiene oder glycidylgruppenhaltige Harze wie Polyester oder Polyurethane, die eine oder mehrere Glycidylgruppen im Molekül enthalten.

Es können auch Polyamidoamine verwendet werden, wie sie z.B. in der EP-A-0 262 720 beschrieben sind. Es sind Reaktionsprodukte aus Mono- oder Poly-Carbonsäuren mit Polyaminen, die primäre Aminogruppen enthalten.

Weiterhin können Polyamin Isocyanataddukte eingesetzt werden. Dabei sind als Isocyanate die auf dem Lacksektor üblichen aliphatischen, cycloaliphatischen und/oder aromatischen Di- oder Polyisocyanate geeignet. Die Umsetzung der Isocyanate mit den Polyaminen erfolgt beispielsweise in einem Temperaturbereich von 20-80°C, gegebenenfalls unter Zugabe geringer Mengen eines Katalysators. Es werden dabei die Polyamine in solcher Menge eingesetzt, daß nach der Reaktion eine ausreichende Anzahl vorhanden ist.

Beispiele für acryloylungesättigte Verbindungen zum Herstellen von Polyaminaddukten sind in der US 4 303 563 beschrieben. Die Acryloyl-N-Gruppen der Polyacryloligomeren können mit Polyaminen umgesetzt werden. Die Anlagerung erfolgt bevorzugt bei höherer Temperatur. Die entstehenden Produkte können ggf. noch olefinisch ungesättigte Funktionalitäten aufweisen.

Weitere Methoden zur Synthese von aminfunktionalisierten Härtern sind in der EP-A-0 002 801 sowie der EP-A-0 179 954 beschrieben. Es handelt sich um Copolymere auf Basis von (Meth)acrylsäurederivaten, die mit Diaminen oder Alkyleniminen umgesetzt und funktionalisiert werden.

Als Polyurethanharzkomponente sind handelsübliche wäßrige Polyurethandispersionen geeignet. Die Polyurethanbindemittel sind nicht vernetzt. Sie enthalten im allgemeinen keine weiteren reaktiven Gruppen, die zur Vernetzung mit dem Epoxyaminsystem notwendig sind. Die Löslichkeit oder Verdünnbarkeit der Polyurethanbindemittel in Wasser kann über Emulgatoren oder über einreagierte ionische Gruppen oder nichtionische hydrophile Gruppen erreicht werden. Bevorzugt enthalten die Polyurethanbindemittel anionische Anteile, z. B. saure Gruppen, z. B. Carboxylgruppen oder Sulfonsäuregruppen, die nach Neutralisation mit Basen, wie Ammoniak oder Aminen, eine Überführung in die Wasserphase ermöglichen. Dabei können als Basen zur Neutralisation auch die als Vernetzer eingesetzten Polyamine dienen. Die Polyurethanbindemittel können chemisch modifiziert sein. Beispiele für verwendbare Polyurethanharze sind im Folgenden aufgeführt.

Beispiele für Polyurethanharze sind in der US 3 297 745, der US 3 700 634 oder der DE-OS 37 22 005 beschrieben. Es handelt sich hierbei um Urethanacrylatpolymere, die durch Umsetzung von Polyisocyanaten mit hydroxyfunktionalisierten Acrylaten erhalten wurden oder um Pfropfpolymerisate von Acrylmonomeren auf Polyurethandispersionen.

Weitere Polyurethandispersionen sind in der DE-OS 39 36 794, der EP-A- 297 576 und der DE-OS 32 10 051 beschrieben. Es handelt sich in diesem Falle um Bindemittel, die aus Polyurethanpolyharnstoffen bestehen. Diese Bindemittel können in eine Dispersionsphase überführt werden.

Weitere Polyurethanharze sind in der DE-OS 40 00 889 beschrieben. Es handelt sich um Reaktionsprodukte auf Basis Diisocyanaten mit Polyhydroxylalkansäuren und Polyesterpolyolen.

Weitere Polyurethandispersionen sind in den EP-A 0 089 497, US 41 47 679 oder DE-OS 24 46 440 beschrieben. Als Ausgangsverbindung können dabei z. B. auch Polyester oder Polyether eingesetzt werden. Es handelt sich in diesem Falle um wäßrige Polyurethandispersionen, die mit einreagierten neutralisierbare Gruppen enthaltenden Verbindungen hergestellt werden.

Die Harze können linear, verzweigt oder ggfs. auch teilweise vernetzt sein. Die Herstellung der Polyurethane ist variierbar. Durch Einsatz verschiedener Ausgangsverbindungen können die Eigenschaften variiert werden. So sind z. B. Elastizität, Viskositätsverhalten, Glanz oder Benetzungsfähigkeit über die Auswahl der Rohstoffe zu beeinflussen. Die Polyurethanharze bilden entweder nach Neutralisation oder zusammen mit Emulgatoren stabile wäßrige Dispersionen.

Das Molekulargewicht der Polyurethanharze (PU-Bindemittel) kann beispielsweise bei 500 - 500000 liegen. Bevorzugt liegt das Molekulargewicht bei 1500 bis 200000. Bevorzugt ist die Verwendung von nicht vernetzten, carboxylgruppenhaltigen neutralisierten PU-Bindemitteln.

Als Emulgatoren für die erfindungsgemäß eingesetzten Epoxyharze und Polyurethanharze können auf dem Lacksektor übliche ionische und nichtionische Emulgatoren verwendet werden, z.B. Alkylsulfonate.

Das erfindungsgemäße Überzugsmittel kann als 1K-System oder als 2K-System formuliert werden. Als 2K-System bestehet das Überzugsmittel aus zwei unterschiedlichen Komponenten, von denen die eine das Epoxidharz und die andere den Vernetzer enthält. Vor der Applikation des 2K-Systems werden die einzelnen Komponenten im gewünschten Verhältnis gemischt und bilden dann das applikationsfertige Überzugsmittel. Das Polyurethanharz kann in der Epoxidharz-Komponente vorliegen, in der Vernetzer-Komponente oder in beiden Komponenten. Es ist darauf zu achten, daß die Verträglichkeit der jeweiligen Mischung gegeben ist und zu lagerstabilen Dispersionen führt. Während die Komponente, die das Polyurethanharz enthält, wäßrig ist, kann die zweite Komponente ebenfalls eine wäßrige Dispersion sein, oder sie liegt in wasserverdünnbarer konzentrierter Form vor. In diesem Falle wird bei der Herstellung des Überzugsmittels diese Komponente zusammen mit der anderen wäßrigen Komponente in die Wasserphase überführt. Bevorzugt liegen beide Komponenten in mit Wasser verdünnter Form vor.

Die Mischung der beiden Komponenten wird im allgemeinen so durchgeführt, daß das Verhältnis der reaktiven H-Atome der Aminogruppen zu den Epoxidgruppen von 0,7 : 1 bis 1,5 : 1, bevorzugt von 0,9 : 1 bis 1,3 : 1 vorliegt.

Das Vermischen des Polyurethanharzes mit den filmbildenden Harzen kann in Dispersionsform durchgeführt werden, oder es wird das Polyurethanharz beispielsweise zusammen mit dem Härter oder dem Epoxidharz gemischt und dann gemeinsam in die wäßrige Phase überführt. Eine bevorzugte Ausführungsform ist die Verwendung einer anionischen Polyurethandispersion, bei der die Stabilisierung der Dispersion durch mit Amin neutralisierte, einreagierte Carboxylgruppen erfolgt. Der Festkörper beträgt beispielsweise 30 bis 70 Gew.-%. Als Neutralisationsmittel ist z.B. ein flüchtiges Amin geeignet. Bevorzugt ist die Verwendung eines Polyurethanharzes, bei dem die Neutralisation über die Aminogruppe des Härters erfolgt. In diesem Fall wird die Menge der bei der Filmbildung abzudunstenden flüchtigen Anteile verringert.

Das erfindungsgemäße Überzugsmittel kann auch übliche Pigmente und Füllstoffe enthalten. Beispiele dafür sind Titandioxid, Bariumsulfat, Aluminiumsilikat, Magnesiumsilikat, Siliciumdioxid, Zinkphosphat, Ruß, farbgebende und/oder transparente organische oder anorganische Pigmente, feinverteilte Metallpulver, insbesondere Aluminiumpulver oder Interferenzpigmente. Als Füllstoffe sind ebenfalls vernetzte, gegen Lösungsmittel beständige organische Polymermikroteilchen geeignet.

Die Pigmente können entweder in der Epoxidharzkomponente oder in der Härterkomponente dispergiert sein. Beim Dispergieren bzw. Vermahlen entstehen stabile Pigment/Bindemittel-Dispersionen. Eine chemische Reaktion zwischen Pigmenten und Bindemittelbestandteilen soll nicht stattfinden. Eine weitere Möglichkeit ist die, daß die Pigmente in geringen Mengen eines üblichen Pasten- oder Netzharzes dispergiert werden und diese Mischung dann zusammen mit einem filmbildenden Bindemittel in die Wasserphase überführt wird.

Die Viskosität der pigmentierten Komponente ist so einzustellen, daß eine Sedimentation oder Phasentrennung auch bei längerer Lagerung nicht eintritt. Bevorzugt ist das Dispergieren der Pigmente in Form einer wäßrigen Pigmentpaste. Ebenfalls bevorzugt ist das Vorliegen der Pigmente in der Vernetzerkomponente.

Eine weniger geeignete Ausführungsform wird dadurch erhalten, daß die wäßrige Pigmentzubereitung als dritte Komponente beim Herstellen eines applizierbaren 2K-Überzugsmittels zugefügt wird. Diese Vorgehensweise kann bei z.B. Lagerstabilitätsproblemen verwendet werden.

Weiterhin kann das Überzugsmittel bzw. bei 2K-Systemen jede der beiden Komponenten oder eine der beiden Komponenten lackübliche Hilfsstoffe enthalten. Beispiele dafür sind Antikratermittel, Antischaummittel, Katalysatoren, Verlaufsmittel, Haftvermittler oder geringe Anteile von organischen Lösungsmitteln. Diese Hilfsstoffe dienen zur Einstellung verschiedener Eigenschaften, die bei der Verarbeitung und bei der Lagerung oder bei der Applikation wichtig sind. Die entsprechenden Additive dürfen jedoch nicht die Eigenschaften des vernetzten Lackfilms z.B. Korrosionsschutz oder Haftfestigkeit negativ beeinflussen.

Die Polyamin-Komponente und die Epoxidharzkomponente eines 2K-Systems haben einen Festkörper von jeweils 30 - 95 Gew.-%; als Lösungsmittel ist überwiegend Wasser enthalten. Der Anteil organischer flüchtiger Bestandteile, wie z.B. organische Lösungsmittel, im vereinigten Überzugsmittel soll unter 10 Gew.-% sein. Der Pigmentanteil ist bezogen auf den gesamten Bindemittelanteil 0 bis 150 Gew.-%. Der Anteil des Polyurethanharzes beträgt 5 - 80 Gew.-%, bevorzugt 15 - 70 Gew.-%, bezogen auf die Summe des Festkörpergewichts von Epoxidharz und Polyamin.

Bei der Herstellung des erfindungsgemäßen Überzugsmittels werden die jeweiligen Komponenten A und B mit einem geeigneten Aggregat vermischt. Dazu ist es meist zweckmäßig, wenn beide Komponenten eine vergleichbare Viskosität haben. Nach kurzem, gründlichen Homogenisieren z.B. durch einfaches Umrühren oder mit einem Rotor-Statormischer und gegebenenfalls Zufügen von weiterem Wasser zum Einstellen einer geeigneten Verarbeitungsviskosität ist das Überzugsmittel applikationsfertig. Es kann auf verschiedene Arten, wie z.B. Tauchen, Rollen, Streichen, Spritzen, aufgetragen werden. Die Verarbeitungszeit richtet sich nach der Reaktivität der eingesetzten Komponenten. Sie kann zwischen 30 Min. und 24 Stunden betragen. Über einen Katalysator kann die Vernetzungsreaktion ggfs. beschleunigt werden. Nach dem Applizieren können der Verlauf und die chemische Reaktion weiterhin durch Erhöhung der Temperatur beschleunigt werden. Die Grenzen liegen z.B. bei 20 bis 120°C, bevorzugt sind jedoch Temperaturen unter 80°C.

Das erfindungsgemäße Überzugsmittel kann zum Beschichten verschiedener Substrate, wie z.B. Metallteile, Kunststoffteile, Holz, Glas, lackierte Metallteile, Halbmetallteile, mineralische Untergründe, verwendet werden. Bevorzugt ist eine Verwendung zum Beschichten von Metall- und/oder Kunststoffteilen für die Automobil- und Nutzfahrzeugindustrie. Als Kunststoffsubstrat sind z.B. Polyurethane, Polyester, Polyamide oder Polyolefine geeignet. Dabei können durch Einstellung der Vernetzungstemperatur auch temperaturempfindliche Substrate beschichtet werden.

Nach dem Vernetzen erhält man homogen beschichtete Substrate mit einer glatten störungsfreien Oberfläche. Die Haftung zum Substrat ist gut. Die so erhaltenen lackierten Gegenstände können gegebenenfalls mit weiteren Lackschichten versehen werden. So ist es z. B. möglich, darauf Klarlacküberzüge, farbige Überzüge, Basis-Decklacküberzüge oder Steinschlagschutzüberzüge zu applizieren. Die so hergestellten beschichteten Gegenstände können im weiten Rahmen eingesetzt werden. Sie sind besonders geeignet, in der Kraftfahrzeugindustrie homogene, elastische und gut haftende Basisgrundierungen auf Metall- und Kunststoffsubstraten zu erzeugen. Diese können in der Autoserien- und der Autoreparatur-Lackierung angewendet werden. Solche Basisschichten können danach mit üblichen Verfahren zu Mehrschichtlackierungen weiterverarbeitet werden. Dabei ist von besonderem Vorteil, daß die Überzugsmittel der Mehrschichtlackierung wäßrig oder konventionell aufgebaut sein können, ohne mit der wäßrigen Grundierung zu Verträglichkeitsproblemen zu führen.

### Herstellungsbeispiel 1

### Herstellung eines Polyurethanharzes nach Beispiel 1 der DE-OS 40 00 889:

In einem Reaktionsgefäß mit Innenthermometer und Rückflußkühler werden 1687 g eines linearen gesättigten Poylesters (aufgebaut aus Adipinsäure, sowie Neopentylglykol und Hexandiol-1.6 im Molverhältnis 1:1) mit einer Säurezahl unter 1, einer OH-Zahl von 130 und einer Viskosität von 275 mPa.s (gemessen in 80%iger Lösung in Aceton bei 25°C) unter gutem Rühren mit 182,5 g Dimethylolpropionsäure und 525 g trocknem Aceton gemischt. Nach Zusatz von 803 g Dicyclohexylmethan-diisocyanat wird langsam auf 70°C aufgewärmt. Diese Reaktionstemperatur wird gehalten bis der NCO-Gehalt unter 0,2% liegt. Nach Abkühlen auf 60°C werden 875 g Butoxyethanol zugegeben und anschließend das Aceton gegebenenfalls unter Anlegen von Vakuum abdestilliert.

| | |
|---|---|
| Festkörper (30 Min 150° C) : | 75 Gew.-% |
| Säurezahl (bezogen auf Festharz) : | 29 |
| Viskosität bei 25° C : | ca. 7 Pa.s |
| (nach Verdünnen auf 60 Gew.-% mit Butoxyethanol) | |

### Herstellungsbeispiel 2

### Herstellung einer wäßrigen Polyurethan-Dispersion nach DE-OS 36 28 124, Herstellungsbeispiel 2

In einem Reaktionsgefäß mit Rührer, Innenthermometer, Heizung und Rückflußkühler werden 250 g eines linearen Polyesters (aufgebaut aus Adipinsäure, Isophthalsäure, Hexandiol; OH-Zahl 77, Säurezahl 10) mit 80 g Methylethylketon und 53,3 g N-Methylpyrrolidon auf 70°C erwärmt und bei dieser Temperatur 74 g hydriertes Bisphenol A sowie 28,3 g Dimethylolpropionsäure zugesetzt. Der Ansatz wird auf 120°C erwärmt und eine halbe Stunde bei dieser Temperatur gerührt. Anschließend werden bei 70°C 146,7 g Hexamethylendiisocyanat zugesetzt. Nach einer exothermen Phase (Temperatur < 90°C) wird der Ansatz so lange bei 75°C gehalten, bis die Restisocyanatzahlwerte kleiner als 1,8 sind. Die warme Harzmischung wird in 891 g entionisiertes Wasser und 23,5 g Triethylamin unter starkem Rühren dispergiert. 5 min nach Ende der Harzzugabe werden 10,5 g Propylendiamin-1,3 in 75 g entionisiertes Wasser zugesetzt und der Ansatz noch 1 Stunde gerührt.

Es resultierte eine durchscheinende wäßrige Dispersion mit folgenden Kenndaten:

| | |
|---|---|
| Feststoffgehalt | 33 % |
| Viskosität (20°C) | 109 mPa.s |
| pH-Wert | 9,8 |
| Säurezahl | 27 (mg KOH pro g Festharz) |
| Mn | ca. 120 000 |

### Herstellungsbeispiel 3

### Pigmentpaste 1:

300 g eines aliphatischen Polyamins (H-Äquivalentgewicht 185, Viskosität 12 530 mPas; ^{R}Beckopox-Spezialhärter EH 623) werden bei 35° bis 40°C mit 100 g Dipropylenglykoldimethylether, 1500 g entsalztem Wasser, 25 g Netzmittel, 1500 g Titandioxid, 250 g Talkum und 25 g Ruß unter einem schnell laufenden Dissolver 15 Minuten gerührt und danach mit einer Perlmühle bei 35 bis 40°C vermahlen.
Anschließend werden weitere 200 g des aliphatischen Polyamins unter Rühren zugegeben.

### Pigmentpaste 2:

Aus 2200 g Polyurethanharz-Lösung des Herstellungsbeispiels 1, 57 g Dimethylethanolamin und 2743 g entsalztem Wasser wird eine Polyurethan-Dispersion hergestellt.
620 g der Polyurethan-Dispersion, 3 g Dimethylethanolamin, 147 g Butoxyethanol, 15 g Netzmittel, 0,2 g Antischaummittel, 325 g entsalztes Wasser und 1890 g Titandioxid werden unnter einem schnell laufenden Dissolver gemischt. Die Pigmentpastenmischung wird bei 35 bis 40°C mit einer Perlmühle vermahlen.

### Herstellungsbeispiel 4

### Herstellung eines Expoxidharzes nach DE-A-38 20 301, Beispiel III.7:

a) 309 g technisches Polyethylenglykol mit einem durchschnittlichen Molgewicht von 4000 und 32,5 g eines Polyglycidylethers auf Basis von Bisphenol A mit einem Epoxidäquivalentgewicht von 185 wurden zusammen auf 100°C erhitzt und unter Rühren mit 0,5 ml HBF₄, 50%ig in H₂O, mit 10 ml Methyl-isobutylketon verdünnt, versetzt. Das Äquivalentverhältnis OH/Epoxid betrug 1:1,15, das Epoxidäquivalentgewicht des Kondensates ca. 350 000. Das Methyl-isobutylketon wurde unter Vakuum entfernt.
b) 259 g des unter a) erhaltenen Kondensates, das 50 Gew.-%ig in Benzylalkohol gelöst, eine Viskosität von 5530 mPa.s (25°C) aufwies, wurde bei 130°C mit 0,5 ml einer 1%igen Lösung von Dibutylzinndilaurat in Xylol und anschließend in 30 Min. mit 1,30 g Trimethylhexamethylendiisocyanat (2,2,4-,2,4,4-Isomerengemisch) gelöst in 15 ml getrocknetem Xylol versetzt. Xylol wurde nach einer Haltezeit von 60 Minuten bei 130°C im Vakuum entfernt. 50 Gew.-%ig in Benzylalkohol gelöst, wies das Kondensat eine Viskosität von 7160 mPa.s (25°C) auf.
c) In einem 2-l-Dreihalskolben, ausgerüstet mit Thermometer, Flügelrührer, Rückflußkühler und Tropftrichter, wurden 325 g eines Epoxidharzes auf Basis von Bisphenol A mit einem Epoxydäquivalentgewicht von 183 mit 120 g Bisphenol A und 27 g des unter b) erhaltenen Dispergiermittels gelöst in 27 g Benzylalkohol, in Gegenwart von 700 mg Triphenylphosphin bei 150 bis 170°C bis zu einem Epoxidäquivalentgewicht von 520-540 umgesetzt. Man verdünnte unter Abkühlen mit 60 g Methoxypropanol. Bei einer Rührgeschwindigkeit von ca. 800 Umdrehungen pro Minute und Senkung der Temperatur auf 70-60°C wurden in einem Zeitraum von 5-30 Min. gleichmäßig 85 g deionisiertes Wasser zugesetzt, wobei eine wäßrige Dispersion entstand, die anschließend mit ca. 215 g deionisiertem Wasser weiter verdünnt wurde. Die Dispersion hatte einen Festgehalt von 54,0 Gew.-%, eine Viskosität von 4700 mPas (Brookfield, Spindel 3 bei 6 UpM) sowie eine Teilchengröße von 0,42 µm.

### Beispiel 1

300 g einer wäßrigen Dispersion, die 159 g des nach Herstellungsbeispiel 4c) erhaltenen Bisphenol A-Epoxidharzes (Epoxid-Äquivalentgewicht 530), und 21 g Methoxypropanol enthält, werden mit 250 g einer wäßrigen Dispersion von Herstellungsbeispiel 2 gemischt. Dazu werden als Vernetzerkomponente 54 g eines aliphatischen Polyamins (H-Äquivalentgewicht 185, Viskosität 2800 mPas; ^{R}Beckopox-Spezialhärter VEH 2671) durch gutes Rühren gemischt.

Die wäßrige Überzugsmittel-Zusammensetzung wird auf ein geflammtes Polypropylen (Hostalen ^{R} PPR 8008 der Hoechst AG) mit 35 µm Naßfilm-Schichtdicke aufgetragen.

Der bei Raumtemperatur getrockenete Film ist glatt und haftfest.

### Beispiel 2

Eine Überzugsmittel-Zusammensetzung wird wie in Beispiel 1 hergestellt, wobei jedoch 23 g Polyamin statt 18 g verwendet werden.

Nach dem Aufrakeln auf geflammtem Polypropylen, wie in Beispiel 1 beschrieben, und auf einem Stahlblech bilden sich glatte und haftfeste Filme.

### Beispiel 3

Aus 100 g einer wäßrigen Bisphenol A-Dispersion, wie in Beispiel 1 beschrieben und einer Mischung aus 90 g einer Polyurethan-Dispersion nach Herstellungsbeispiel 2, 180 g Pigmentpaste 1 und 7 g modifiziertes, aliphatisches Polyamin aus Beispiel 1 wird eine pigmentierte Überzugsmittel-Zusammensetzung hergestellt.

Die Überzugsmittel-Zusammensetzung wird auf geflammtem Polypropylen (Hostalen ^{R} PPR 8008) mit 35 µm Naßfilm-Schichtdicke aufgerakelt und nach 7 Tagen Lagerung bei Raumtemperatur auf Feuchtraumbeständigkeit geprüft. Der Lackfilm zeigt nach 240 Stunden keine Einwirkung der Belastung.

Eine weitere Prüfung wird mit folgendem lackaufbau durchgeführt:
a) Grundierung wie oben beschrieben
b) Käuflicher Wasserbasislack Diamantsilber 65 120, Trockenfilm 15 µm (Herberts GmbH)
c) 2K-PUR-Klarlack 47 871 Trockenfilm 35 µm (Herberts GmbH)
Die Grundierung a) und die Lacke b) und c) werden auf Spritzviskosität eingestellt und durch Spritzapplikation nacheinander aufgetragen. Der Klarlack c) wird nach der Applikation des Wasserbasislacks b) und nach 15 Minuten Ablüften appliziert. Der gesamte Lackaufbau wird dann 30 Minuten bei 80°C eingebrannt.

Die Prüfung auf Feuchtraumbeständigkeit (DIN 50017, Kondenswasserprüfklimate) und Elastizität im Durchstoß (DIN 53443 Teil 2) zeigte gute Ergebnisse.

### (PUR = Polyurethan) Vergleichsbeispiel :

Die Überzugsmittel-Zusammensetzung wird wie in Beispiel 3, jedoch ohne Polyurethan-Dispersion, hergestellt.
Der applizierte Film weist eine Oberfläche mit vielen Nadelstichen auf und ist nach 7 Tagen Lagerung spröde, so daß eine weitere Prüfung nicht sinnvoll ist.

### Beispiel 4

Aus 100 g einer wäßrigen Bisphenol A-Dispersion, wie im Beispiel 1 beschrieben, und aus 137 g Pigmentpaste 2 zusammen mit 21 g des modifizierten, aliphatischen Polyamins aus Beispiel 1 wird eine pigmentierte Überzugsmittel-Zusammensetzung hergestellt.

Nach Einstellen einer geeigneten Viskosität mit Wasser wird ein Naßfilm mit 50 µm Schichtdicke auf einem Stahlblech gespritzt. Bei Erwärmen des Bleches auf 70°C bildet sich ein glatter, haftfester und zähelastischer Lackfilm.

### Herstellungsbeispiel 5

### Herstellung eines Epoxidharzes nach DE-OS 36 43 751, Beispiel II.1

a) 150 g technisches Polyethylenglykol mit einem durchschnittlichen Molgewicht (Mw) von 3000 und 18,5 g eines Polyglycidylethers auf Basis von Bisphenol A mit einem Epoxidäquivalentgewicht von 185 wurden zusammen auf 100°C erhitzt und unter Rühren mit 0,9 g BF₃-Ätherat, mit Dioxan auf 5 Gew.-% verdünnt, versetzt. Das Äquivalentverhältnis OH/Epoxyd betrug 1:1, das Epoxydäquivalentgewicht ca. 360 000.
b) In einem 2-l-Dreihalskolben, ausgerüstet mit Thermometer, Flügelrührer, Rückflußkühler und Tropftrichter , wurden 325 g eines Epoxidharzes auf Basis von Bisphenol A mit einem Epoxidäquivalent von 183 mit 98 g Bisphenol A und 27 g des unter a) erhaltenen Kondensates als Dispergiermittel in Gegenwart von 750 mg Triphenylphosphin bei 150 bis 160°C bis zu einem Epoxidäquivalent von 530 umgesetzt. Man verdünnte unter Abkühlung mit 27 g Benzylalkohol und 60 g Methoxypropanol. Unterhalb einer Temperatur von 100°C wurden bei einer Rührgeschwindigkeit von ca. 800 Umdrehungen pro Minute und Senkung der Temperatur auf 70-60°C in einem Zeitraum von 5-30 Min. gleichmäßig 105 g deionisiertes Wasser zugesetzt, wobei eine wäßrige Dispersion entstand, die anschließend mit 173 g deionisiertem Wasser weiter verdünnt wurde. Die Dispersion hatte einen Festgehalt von 55,7 Gew.-%, eine Viskosität von 11 700 mPas (Brookfield, Spindel 3 bei 6 UpM) sowie eine Teilchengröße von 0,66 µm.

### Beispiel 5

128 g eines Epoxidharzes nach Herstellungsbeisplel 5 (Epoxidäquivalent 530) ohne Wasserzugabe werden mit 25 g Talkum und 25 g Titandioxid gemischt und vermahlen. Dazu wird ein Gemisch aus 24 g eines aliphatischen Polyamins (H-Äquivalent 160), 42 g Polyurethanharz nach Herstellungsbeispiel 1 und 60 g Wasser gegeben. Das Überzugsmittel wird mit etwas Wasser verdünnt, auf eine Blechtafel mit ca. 70 µm aufgestrichen und bei 50°C getrocknet. Es entsteht ein gut haftender Film mit störungsfreier Oberfläche. Die Oberfläche ist schleifbar und kann überlackiert werden.

### Herstellungsbeispiel 6

### Herstellung eines Epoxidharzes nach DE-OS 38 20 301, Beispiel III.3

a) 309 g technisches Polyethylenglykol mit einem durchschnittlichen Molgewicht von 4000 und 32,5 g eines Polyglycidylethers auf Basis Bisphenol A mit einem Epoxidäquivalentgewicht von 185 wurden zusammen auf 100°C erhitzt und unter Rühren mit 0,5 ml HBF₄, 50%ig in H₂O mit 10 ml Methylisobutylketon verdünnt, versetzt. Das Äquivalentverhältnis OH/Epoxid betrug 1:1,15, das Epoxidäquivalentgewicht des Kondensates ca. 350 000. Das Methyl-isobutylketon wurde unter Vakuum entfernt.
   280 g des erhaltenen Kondensates, das 50 Gew.-%ig in Benzylalkohol gelöst, eine Viskosität von 5530 mPa.s (25°C) aufwies, wurde bei 130°C in 30 Min. mit 0,7 g Toluylendiisocyanat (TDI 80 = 80% 2,4-, 20% 2,6-Isomeres gelöst in 10 ml getrocknetem Xylol, versetzt. Xylol wurde nach einer Haltezeit von 60 Minuten bei 130°C im Vakuum entfernt. 50 Gew.-%ig in Benzylalkohol gelöst, wies das Kondensat eine Viskosität von 9000 mPa.s (25°C) auf.
b) In einem 2-l-Dreihalskolben, ausgerüstet mit Thermometer, Flügelrührer, Rückflußkühler und Tropftrichter, wurden 325 g eines Epoxidharzes auf Basis von Bisphenol A mit einem Epoxidäquivalentgewicht von 183 mit 120 g Bisphenol A und 27 g des unter a) erhaltenen Kondensats als Dispergiermittel gelöst in 27 g Benzylalkohol, in Gegenwart von 700 mg Triphenylphosphin bei 150 bis 170°C bis zu einem Epoxydäquivalentgewicht von 530 umgesetzt. Man verdünnte unter Abkühlen mit 60 g Methoxypropanol. Bei einer Rührgeschwindigkeit von ca. 800 Umdrehungen pro Minute und Senkung der Temperatur auf 70-60°C wurden in einem zeitraum von 5-30 Min. gleichmäßig 85 g deionisiertes Wasser zugesetzt, wobei eine wäßrige Dispersion entstand., die anschließend mit ca. 215 g deionisiertem Wasser weiter verdünnt wurde. Die Dispersion hatte einen Festgehalt von 54,2 Gew.-%, eine Viskosität von 4900 mPas (Brookfield, Spindel 3 bei 6 UpM) sowie eine Teilchengröße von 0,46 µm.

### Beispiel 6

375 g Pigmentpaste 2 werden mit 85 g einer handelsüblichen, nichtionischen Polyurethan-Dispersion (Festkörper 40 %, DSM ZB 2081 UZ) und 63 g entsalztem Wasser intensiv verrührt und dann werden 54 g eines aliphatischen Polyamins (H-Äquivalent 185, Viskosität 2800 mPas, ^{R}Beckopox-Spezialhärter VEH 2671) unter Rühren zugegeben.

Anschließend werden 300 g einer wäßrigen Dispersion,
die 159 g des modifizierten Bisphenol-A-Epoxidharzes (Epoxid-Äquivalentgewicht 530), nach Herstellungsbeispiel 6, und 21 g Methoxipropanol enthält, zugegeben und intensiv durch Rühren vermischt.

Die wäßrige Überzugsmittel-Zusammensetzung wird auf ein geflammtes Polypropylen (Hostalen^{R} PPR 8008 der Hoechst AG) mit 35 µm Naßfilmschichtdicke aufgetragen.

Die Prüfung erfolgt mit folgendem lackaufbau:
a) Grundierung wie oben beschrieben
b) käuflicher Wasserbasislack diamantsilber 65 120, Trockenfilm 15 µm (Herberts GmbH)
c) 2K-PUR-Klarlack 47 891 Trockenfilm 35 µm (Herberts GmbH)
Die Grundierung a) und die Lacke b) und c) werden auf Spritzviskosität eingestellt und durch Spritzapplikation nacheinander aufgetragen. Der Klarlack c wird nach der Applikation des Wasserbasislacks b) und nach 15 min Ablüften appliziert. Der gesamte Lackaufbau wird dann 45 min bei 80°C getrocknet.

Die Prüfung auf Feuchtraumbeständigkeit,(Kondenswasserprüfklimate, DIN 50017) und Elastizität im Durchstoß (DIN 53443 Teil 2) zeigt sehr gute Ergebnisse.

## Patentansprüche

1. Wäßriges Überzugsmittel, enthaltend
- ein oder mehrere filmbildende, wasserverdünnbare oder wasserlösliche Epoxidharze, mit einem Epoxidäquivalentgewicht von 100 bis 10000,
- ein oder mehrere wasserverdünnbare oder wasserlösliche Polyamine mit mindestens 2 primären und/oder sekundären Aminogruppen im Molekül und einem Äquivalentgewicht von 50 bis 500, sowie
- gegebenenfalls Pigmente, Füllstoffe und/oder weitere lackübliche Hilfsstoffe,
- wobei das Verhältnis der reaktiven H-Atome der Polyamine zu den Epoxidgruppen der Epoxidharze 0,7 : 1 bis 1,5 : 1 beträgt,
**dadurch gekennzeichnet,** daß es
5 bis 80 Gew.-% eines oder mehrerer wasserverdünnbarer oder wasserlöslicher Polyurethanharze mit einem Zahlenmittel des Molekulargewichts (Mn) von 500 bis 500000, bezogen auf die Summe der Festkörpergewichte von Epoxidharz und Polyamin, enthält.

2. Wäßriges Überzugsmittel nach Anspruch 1, dadurch gekennzeichnet, daß es als Zweikomponenten-System vorliegt, in dem die Epoxidharzkomponente und die Polyaminkomponente getrennt vorliegen und das Polyurethanharz zusammen mit der Epoxidharzkomponente und/oder der Polyaminkomponente vorliegt.

3. Wäßriges Überzugsmittel nach Anspruch 2, dadurch gekennzeichnet, daß das Polyurethanharz zusammen mit der Polyaminkomponente vorliegt.

4. Wäßriges Überzugsmittel nach einem der Ansprüche 1 bis 3, dadurch gekennzeichnet, daß das Polyurethanharz als wäßrige Dispersion vorliegt, in der es durch einreagierte anionische Gruppen, nichtionische hydrophile Gruppen oder durch Zusatz eines Emulgators, stabilisiert ist.

5. Wäßriges Überzugsmittel nach Anspruch 4, dadurch gekennzeichnet, daß die anionischen Gruppen saure Gruppen sind, die unter Verwendung des Polyamins der Polyaminkomponente neutralisiert wurden.

6. Wäßriges Überzugsmittel nach einem der vorhergehenden Ansprüche, dadurch gekennzeichnet, daß das Polyamin aliphatisch ist und das Epoxidharz aromatisch ist.

7. Wäßriges Überzugsmittel nach Anspruch 6, dadurch gekennzeichnet, daß das Epoxidharz als wäßrige Dispersion vorliegt.

8. Wäßriges Überzugsmittel nach einem der Ansprüche 1 bis 7, dadurch gekennzeichnet, daß die Pigmente in einem Pastenharz dispergiert sind.

9. Wäßriges Überzugsmittel nach einem der Ansprüche 1 bis 8, dadurch gekennzeichnet, daß die Pigmente in der Polyaminkomponente vorliegen.

10. Verwendung der Überzugsmittel nach einem der Ansprüche 1 bis 9 zur Herstellung von Überzügen.

11. Verwendung nach Anspruch 10 zur Herstellung von Überzügen auf Kunststoffsubstraten.

12. Verwendung nach Anspruch 10 oder 11 bei der Kraftfahrzeugreparaturlackierung.

13. Verwendung der Überzugsmittel nach einem der Ansprüche 1 bis 9 bei der Herstellung von Mehrschichtlackierungen.

14. Substrat, beschichtet mit einem Überzugsmittel nach einem der Ansprüche 1 bis 9.

## Claims

1. Aqueous coating agent containing
- one or more film-forming, water-dilutable or water-soluble epoxy resins with an epoxide equivalent weight of 100 to 10,000,
- one or more water-dilutable or water-soluble polyamines with at least 2 primary and/or secondary amino groups in the molecule and an equivalent weight of 50 to 500, as well as
- optionally pigments, fillers and/or other customary lacquer auxiliary substances,
- wherein the ratio of the reactive H atoms of the polyamines to the epoxide groups of the epoxy resins is 0.7:1 to 1.5:1,
characterized in that it contains
5 to 80 wt% of one or more water-dilutable or water-soluble polyurethane resins with a number-average molecular weight (Mn) of 500 to 500,000, relative to the sum of the solids weights of epoxy resin and polyamine.

2. Aqueous coating agent according to Claim 1, characterized in that it exists as a two-component system, in which the epoxy resin component and the polyamine component are present separately and the polyurethane resin is present together with the epoxy resin component and/or the polyamine component.

3. Aqueous coating agent according to Claim 2, characterized in that the polyurethane resin is present together with the polyamine component.

4. Aqueous coating agent according to one of Claims 1 to 3, characterized in that the polyurethane resin is present as an aqueous dispersion, in which it is stabilized by reacted-in anionic groups, nonionic hydrophilic groups or the addition of an emulsifier.

5. Aqueous coating agent according to Claim 4, characterized in that the anionic groups are acidic groups which have been neutralized by using the polyamine of the polyamine component.

6. Aqueous coating agent according to one of the preceding claims, characterized in that the polyamine is aliphatic and the epoxy resin is aromatic.

7. Aqueous coating agent according to Claim 6, characterized in that the epoxy resin is present as an aqueous dispersion.

8. Aqueous coating agent according to one of Claims 1 to 7, characterized in that the pigments are dispersed in a paste resin.

9. Aqueous coating agent according to one of Claims 1 to 8, characterized in that the pigments are present in the polyamine component.

10. Use of the coating agents according to one of Claims 1 to 9 for the production of coatings.

11. Use according to Claim 10 for the production of coatings on plastics substrates.

12. Use according to Claim 10 or 11 in motor vehicle repair lacquering.

13. Use of the coating agents according to one of Claims 1 to 9 in the production of multicoat lacquer finishes.

14. Substrate coated with a coating agent according to one of Claims 1 to 9.

## Revendications

1. Matériau de revêtement aqueux, comprenant :
- une ou plusieurs résines époxydes filmogènes, hydrosolubles ou diluables à l'eau, avec un poids équivalent en époxyde de 100 à 10 000,
- une ou plusieurs polyamines hydrosolubles ou diluables à l'eau ayant au moins 2 groupes amino primaires et /ou secondaires dans la molécule et un poids équivalent de 50 à 500, ainsi que
- le cas échéant des pigments, des charges et/ou d'autres additifs usuels dans les peintures,
- la proportion des atomes H réactifs des polyamines aux groupes époxydes des résines époxydes est de 0,7 : 1 à 1,5 : 1, caractérisé en ce qu'il contient 5 à 80% en poids d'une ou plusieurs résines de polyuréthanne hydrosolubles ou diluables à l'eau avec une moyenne en nombre du poids moléculaire (Mn) compris entre 500 et 500 000 par rapport à la somme des poids de solide de résine époxyde et de polyamine.

2. Matériau de revêtement aqueux selon la revendication 4, caractérisé en ce qu'il se présente sous forme de système bi- composant, dans lequel le composant résine époxyde et le composant polyamine se trouvent séparés et que la résine de polyuréthanne se trouve avec le composant résine époxyde et/ou le composant polyamine.

3. Matériau de revêtement aqueux selon la revendication 2, caractérisé en ce que la résine polyuréthanne se trouve avec le composant polyamine.

4. Matériau de revêtement aqueux selon l'une des revendications 1 à 3, caractérisé en ce que la résine polyuréthanne se trouve en dispersion aqueuse, dans laquelle elle est stabilisée par des groupes anioniques incorporés, par des groupes hydrophiles non ioniques ou par addition d'un émulsionnant.

5. Matériau de revêtement aqueux selon la revendication 4, caractérisé en ce que les groupes anioniques sont des groupes acides, qu'on neutralise en utilisant la polyamine du composant polyamine.

6. Matériau de revêtement aqueux selon l'une des revendications précédentes, caractérisé en ce que la polyamine est aliphatique et la résine époxyde est aromatique.

7. Matériau de revêtement aqueux selon la revendication 6, caractérisé en ce que la résine époxyde se trouve en dispersion aqueuse.

8. Matériau de revêtement aqueux selon l'une des revendications 1 à 7, caractérisé en ce que les pigments sont dispersés dans une résine pâteuse.

9. Matériau de revêtement aqueux selon l'une des revendications 1 à 8, caractérisé en ce que les pigments se trouvent dans le composant polyamine.

10. Utilisation de matériau de revêtement selon l'une des revendications 1 à 9 pour produire des revêtements.

11. Utilisation selon la revendication 10 pour réaliser des revêtements sur des substrats de matière plastique.

12. Utilisation selon la revendication 10 ou 11 en laquage de réparation de véhicules automobiles.

13. Utilisation de matériau de revêtement selon l'une des revendications 1 à 9 pour réaliser des laquages multicouches.

14. Substrat, revêtu d'un matériau de revêtement selon l'une des revendications 1 à 9.
